(19)

**Europäisches Patentamt**
**European Patent Office**
**Office européen des brevets**

(11) **EP 1 564 097 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(51) Int Cl.:
***B60T 8/1755*** *(2006.01)*

(21) Anmeldenummer: **04106825.5**

(22) Anmeldetag: **22.12.2004**

(54) **Vorrichtung und Verfahren zur Abschätzung des Zustandes eines Kraftfahrzeuges**

Method and device for estimating a driving state of an automotive vehicle

Procédé et dispositif de détection de l'état de marche d'un véhicule automobile

(84) Benannte Vertragsstaaten:
**DE FR GB**

(30) Priorität: **12.02.2004 DE 102004006944**

(43) Veröffentlichungstag der Anmeldung:
**17.08.2005 Patentblatt 2005/33**

(73) Patentinhaber: **Ford Global Technologies, LLC Dearborn, MI 48126 (US)**

(72) Erfinder:
• **Kees, Markus Dr.**
  **41516 Grevenbroich (DE)**
• **Seibertz, Achim**
  **52064 Aachen (DE)**
• **Requejo, Julian**
  **52062 Aachen (DE)**
• **Arndt, Christoph Dr.**
  **57583 Moerlen (DE)**
• **Lakehal-ayat, Mohsen**
  **52072 Aachen (DE)**
• **Webers, Klaus**
  **80935 München (DE)**
• **Schmitz, Peter**
  **52076 Aachen (DE)**

(74) Vertreter: **Drömer, Hans-Carsten et al Ford-Werke Aktiengesellschaft Patentabteilung NH/DRP Henry-Ford-Strasse 1 50725 Köln (DE)**

(56) Entgegenhaltungen:
**DE-A1- 10 016 896      DE-A1- 10 215 464**
**US-A1- 2004 024 565**

• **MASATO ABE: "The Dynamics of Vehicles on roads and tracks, Supplement to Vehicle System Dynamics, Volume 41" 24. August 2003 (2003-08-24), TAYLOR & FRANCIS GROUP PLC, LONDON UK , KANAGAWA, JAPAN , XP002326722 ISBN 90 265 1972 9 "State estimation of vehicle handling dynamics using non-linear robust extended adaptive kalman filter", Med Matria and Matthew C. Best * Seite 103 - Seite 112 * * Absätze [0001] - [0003] ***
• **FRYXELL D ET AL: "Integrated design of navigation, guidance and control systems for unmanned underwater vehicles" OCEANS '94. 'OCEANS ENGINEERING FOR TODAY'S TECHNOLOGY AND TOMORROW'S PRESERVATION.' PROCEEDINGS BREST, FRANCE 13-16 SEPT. 1994, NEW YORK, NY, USA, IEEE, Bd. 3, 13. September 1994 (1994-09-13), Seiten III-105, XP010125081 ISBN: 0-7803-2056-5**

EP 1 564 097 B1

## Beschreibung

Die Erfindung betrifft ein Verfahren zur Abschätzung des Zustandsvektors eines Kraftfahrzeuges sowie eine Steuerungsvorrichtung für ein Kraftfahrzeug, welche einen zur Ausführung des Verfahrens eingerichteten Estimator enthält.

Für die Kontrolle von Kraftfahrzeugen werden in zunehmendem Maße elektronische Systeme eingesetzt, welche die direkte Steuerung des Fahrers ergänzen bzw. teilweise ersetzen. Beispielhaft seien diesbezüglich Antiblockiersysteme (ABS) sowie die elektronische Fahrzeugstabilisierung (ESP) genannt. Zur Erfüllung ihrer Funktion benötigen derartige Systeme eine möglichst genaue und zuverlässige Kenntnis des aktuellen Fahrzeugzustandes. Da nicht alle relevanten Zustandsgrößen einer einfachen Messung zugänglich sind, müssen sie zum Teil mit Hilfe von Fahrzeugmodellen geschätzt werden, wobei die Schätzungen durch einen Vergleich mit Messwerten beobachtbarer Größen abgeglichen werden können. Problematisch ist dabei jedoch, dass sowohl die modellierten Prozesse innerhalb des Fahrzeuges als auch die Messung der Kontrollgrößen einem Rauschen unterliegt. Des Weiteren werden manche Prozesse innerhalb des Fahrzeuges durch nichtlineare Funktionen beschrieben, so dass ihre Modellierung einen erheblichen Rechenaufwand erfordert.

Ein gattungsgemäßes Verfahren zum Schätzen einer Kinetischen zustandsgröße eines Fahrzeuges ist aus dem Dokument DE 10016896 bekannt.

Vor diesem Hintergrund war es Aufgabe der vorliegenden Erfindung, Mittel für eine zuverlässige und gleichzeitig schnelle, d.h. während des laufenden Fahrzeugbetriebes in Echtzeit ausführbare Abschätzung des Zustandes eines Kraftfahrzeuges bereitzustellen.

Diese Aufgabe wird durch ein Verfahren mit den Merkmalen des Anspruchs 1 sowie durch eine Steuerungsvorrichtung mit den Merkmalen des Anspruchs 9 gelöst. Vorteilhafte Ausgestaltungen sind in den Unteransprüchen enthalten.

Gemäß einem ersten Aspekt betrifft die Erfindung ein Verfahren zur Abschätzung des Zustandsvektors $\underline{x}$ eines Kraftfahrzeuges. Die Komponenten des Zustandsvektors stellen definitionsgemäß (physikalische) Größen dar, welche den dynamischen Zustand des Kraftfahrzeuges (gemäß einem vorgegebenen Beschreibungsansatz) eindeutig und in der Regel ohne Redundanz beschreiben. Der Zustandsvektor enthält erfindungsgemäß mindestens die dynamische Radbelastung für jedes Rad und kann insbesondere mindestens eine der folgenden Größen enthalten: den Steuerwinkel des Lenksystems; die Vorwärtsgeschwindigkeit, die Lateralgeschwindigkeit, die Lateralbeschleunigung, die Gierrate, den Nickwinkel, die Nickrate, den Rollwinkel, die Rollrate, den Schwimmwinkel, die Vertikalbewegung des Kraftfahrzeuges; den Schräglaufwinkel der Räder; die dynamische Radseitenkraft. Das Verfahren ist durch die folgenden Merkmale gekennzeichnet:

a) Der Zustandsvektor $\underline{x}$ gehorcht einer stochastischen Differentialgleichung erster Ordnung der Form

$$\underline{\dot{x}}(t) = A \cdot \underline{x}(t) + \underline{f}[\underline{x}(t)] + B \cdot \underline{u}(t) + G \cdot \underline{w}(t) \qquad (1)$$

Darin sind die Größen *A, B, G* vorgegebene Matrizen, die lineare Anteile der Fahrzeugdynamik beschreiben, während *f* eine vorgegebene nichtlineare Funktion ist, die z.B. das nichtlineare Verhalten der Räder beschreibt. Des Weiteren ist die Größe *u* ein Steuervektor und die Größe *w* eine Zufallsvariable, die das Prozessrauschen des durch die Differentialgleichung beschriebenen Prozesses beschreibt.

b) Es wird ein Messvektor $\underline{y}$ gemessen, welcher vom Zustandsvektor $\underline{x}$ abhän-gig ist. Der (lineare oder nichtlineare) Messvorgang unterliegt dabei typischerweise einem Messrauschen, welches vom vorstehend erwähnten Prozessrauschen unabhängig sein soll.

c) Der Zustandsvektor $\underline{x}$ wird mit Hilfe eines Erweiterten Kalman-Filters abgeschätzt, wobei die Berechnung der zugehörigen Kalman-Gain Matrix *K* a p-proximativ erfolgt. Geeignete Arten der Approximation werden im Zusammenhang mit bevorzugten Ausführungsformen der Erfindung näher erläutert. Des Weiteren kann hinsichtlich der Technik des Kalman-Filters bzw. des Erweiterten Kalman-Filters auf die einschlägige Literatur hingewiesen werden (z. B. Peter S. Maybeck: "Stochastic Models, Estimation, and Control", Volume 1, Academic Press, Inc., 1979; Greg Welch, Gary Bishop: "An Introduction to the Kalman Filter", TR 95-041, Department of Computer Science, University of North Carolina at Chapel Hill).

Das vorstehend beschriebene Verfahren hat den Vorteil, dass es durch die Berücksichtigung nichtlinearer Zusammenhänge die Prozesse in einem Kraftfahrzeug mit großer Genauigkeit simulieren kann. Durch die approximative Berechnung der Kalman-Gain Matrix wird jedoch gleichzeitig sichergestellt, dass der Rechenaufwand des Verfahrens begrenzt bleibt, so dass es insbesondere in Echtzeit wä h-rend des laufenden Fahrzeugbetriebes durchgeführt werden kann.

Wie bereits erwähnt wurde, kann die Approximation der Kalman-Gain Matrix auf verschiedene Weisen erfolgen. Gemäß einer ersten Variante liegt die Approximation darin, dass die Kalman-Gain Matrix als unabhängig vom Zustandsvektor $x$ angenommen wird. Die Matrix kann daher vorab "offline" berechnet und abgespeichert werden, so dass die aufwändigen Kovarianzberechnungen nicht in Echtzeit während einer laufenden Anwendung vorgenommen werden müssen.

Eine Approximation der vorstehend erläuterten Art wird vorzugsweise dadurch realisiert, dass für die Berechnung der Kalman-Gain Matrix eine Linearisierung der Differentialgleichung (1) des beobachteten Prozesses sowie eine ("künstlich") erhöhte Kovarianz des Prozessrauschens zugrunde gelegt werden. Mit anderen Worten wird bei einem Teil der Kalman-Filterung eine Vereinfachung der System-Differentialgleichung vorgenommen und diese dann durch die Annahme eines verstärkten Prozessrauschens berücksichtigt. Die Berechenbarkeit des Problems wird auf diese Weise erheblich erleichtert, ohne dass jedoch eine falsche Zuverlässigkeit der Resultate vorgetäuscht würde.

Gemäß einer anderen Variante der Approximation der Kalman-Gain Matrix können deren Komponenten durch Näherungsfunktionen approximiert werden, die von Komponenten des Zustandsvektors $x$ und/oder des Messvektors $y$ abhängen. Diese Näherungsfunktionen können vorab bestimmt und abgespeichert werden (beispielsweise als Lookup-Tabelle), so dass während einer laufenden Anwendung nur noch einfachste Berechnungen zur Ermittlung der Kalman-Gain Matrix erforderlich sind.

Gemäß einer bevorzugten Ausgestaltung der vorstehend erläuterten Variante des Verfahrens werden die Komponenten der Kalman-Gain Matrix an im Zustandsraum verteilten Stützpunkten (ohne Approximation) berechnet und Näherungsfunktionen an diesen Stützpunkten den berechneten Werten angepasst. Als Näherungsfunktionen kommen beispielsweise Polynome über einem entsprechenden Definitionsbereich in Frage, wobei die Koeffizienten dieser Polynome die durch ein Fitting anzupassenden Parameter darstellen.

Bei der vorstehend erläuterten Vorgehensweise werden die Stützpunkte sinnvollerweise so gewählt, dass diese den Zustandsraum möglichst repräsentativ abdekken. Insbesondere können die Stützpunkte den Zustandsvektoren von typischen Fahrmanövern entsprechen, zu denen beispielsweise eine Kurvenfahrt mit konstantem Radius und konstanter Geschwindigkeit, ein Bremsen bei Geradeausfahrt, ein Spurwechsel, ein Bremsen bei Kurvenfahrt und/oder eine Slalomfahrt gehören.

Die Erfindung betrifft ferner eine Steuerungsvorrichtung für ein Kraftfahrzeug, welche einen Estimator enthält, der dahingehend ausgebildet ist, ein Verfahren der vorstehend beschriebenen Art durchzuführen. D. h., dass der Estimator einen Zustandsvektor des Kraftfahrzeuges durch eine nichtlineare stochastische Differentialgleichung erster Ordnung beschreibt und den Zustandsvektor mit Hilfe eines Erweiterten Kalman-Filters abschätzt, wobei die Berechnung der zugehörigen Kalman-Gain Matrix approximativ erfolgt. Hinsichtlich der Einzelheiten, Vorteile und Weiterbildungen dieser Steuerungsvorrichtung wird auf die obige Beschreibung des Verfahrens verwiesen.

Die Steuerungsvorrichtung ist für zahlreiche verschiedene Aufgaben im Rahmen der Kontrolle und Überwachung eines Kraftfahrzeuges verwendbar. Insbesondere kann diese dazu eingesetzt werden, eine elektronische Fahrzeugstabilisierung durchzuführen, bei welcher das Rutschen eines Kraftfahrzeuges und ähnliche instabile Bewegungszustände durch Steuerungseingriffe vermieden werden.

Im Folgenden wird die Erfindung mit Hilfe der beigefügten Figur beispielhaft erläutert, welche schematisch die der Abschätzung des Zustandsvektors eines Kraftfahrzeuges zugrunde liegende Struktur zeigt.

Die automatische Steuerung eines Kraftfahrzeuges basiert auf der Kenntnis des aktuellen Fahrzeugzustandes, wobei dieser Zustand durch einen die vorhandenen Freiheitsgrade erfassenden Zustandsvektor $x$ beschrieben wird. Die (näherungsweise) Kenntnis des jeweils aktuellen Zustandsvektors kann dabei aus Messungen bestimmter Größen sowie aus der Kenntnis des physikalischen Verhaltens des Fahrzeuges einschließlich seiner Räder gewonnen werden.

Die Figur zeigt diesbezüglich schematisch die Struktur, welche der nachfolgend erläuterten Abschätzung des Fahrzeugzustandes $x$ zugrunde liegt. Im oberen Teil der Figur ist das reale System 10 dargestellt, welches zum (diskretisierten) Zeitpunkt k Ein gangs- oder Steuersignale $u(k)$ erhält und aufgrund seiner Dynamik hieraus einen internen Zustandsvektor $x(k)$ erzeugt. Über Sensoren können von diesem Zustandsvektor $x$ abhängige Messvektoren $y(k)$ ermittelt werden.

Im unteren Teil der Figur ist parallel zum realen System 10 ein Estimator 20 dargestellt, welcher ein Zustandsraum-Modell 21 sowie einen Schätzalgorithmus 22 enthält. Das Zustandsraum-Modell 21 erhält wie das reale System 10 die Steuersignale $u(k)$, zu denen jedoch noch eine das Systemrauschen beschreibende Zufallsvariable $w(k)$ addiert wird. Der Ausgang des Zustandsraum-Modells 21 ist mit dem Schätzalgorithmus 22 verknüpft, welcher unter Berücksichtigung der Messvektoren $y(k)$ einen Schätzwert $x_{est}(k)$ für den tatsächlichen (aber unbekannten) Systemzustand $x(k)$ ermittelt.

Die Fahrzeugdynamik muss im Modell 21 so beschrieben werden, dass alle wichtigen Eigenschaften des Fahrzeuges erfasst werden und dass alle wichtigen Effekte der beteiligten Systeme mit dem Zustandsvektor x beschrieben werden können. Durch die Räder (einschließlich der Reifen) wird z. B. eine nichtlineare Komponente in das Fahrzeugmodell eingeführt, welche das Fahrzeugverhalten in Grenzsituationen wie Bremsen während einer Kurvenfahrt, einem schnellen Slalom, schnellen Spurwechseln od. dgl. beeinflusst. Das im Estimator 20 enthaltene Zustandsraum- oder Prozessmodell 21 muss daher eine gewisse Komplexität aufweisen, welche jedoch andererseits in der Praxis durch die Rechenleistung des für die Implementierung des Estimators 20 verwendeten Prozessors begrenzt wird.

Der auf dem Zustandsraum-Modell 21 und den Messungen y(k) be ruhende Estimator 20 stellt allgemein gesprochen eine Statistik eines dynamischen stochastischen Prozesses dar. Da vorliegend nur Interesse an den Erwartungswerten des Zustandsvektors und an deren Genauigkeit besteht, kann der stochastische Prozess auf einen Gaus-Prozess reduziert werden. Hierdurch wird es möglich, einen Kalman-Filter zu verwenden, wobei die gewünschten Momente zweiter Ordnung auf der Basis des physikalischen Modells und der Genauigkeit der verfügbaren Messungen berechnet werden.

Wie vorstehend erwähnt enthält die Fahrzeug- bzw. Prozessdynamik des Modells 21 eine lineare Dynamik zur Beschreibung der Körperbewegungen sowie eine nichtlineare Dynamik für das Rad- bzw. Reifenmodell. Da der Kalman-Filter beide Teile der Dynamik berücksichtigen muss, ist theoretisch ein Erweiterter Kalman-Filter einzusetzen. Problematisch hieran ist jedoch, dass die Stabilität eines solchen Filters nicht für alle Zustände sichergestellt werden kann, und dass die Kovarianzen der Vorhersagefehler parallel zu allen Zuständen berechnet werden müssen (da die Zustände für die Berechnung der zughörigen Ableitungen benötigt werden). Die letztgenannten aufwändigen Berechnungen lassen sich jedoch mit der in der Praxis verfügbaren Rechenleistung nicht in der zur Verfügung stehenden Zeit ausführen. Im Folgenden werden daher zwei alternative Möglichkeiten beschrieben, mit denen die Abschätzung der Zustandsvariablen x bei hoher Genauigkeit in der verfügbaren Zeit durchgeführt werden kann.

Berücksichtigung der Nichtlinearität im Systemrauschen

Ein erster Ansatz zur Lösung der vorstehend erläuterten Problematik lässt sich allgemein dadurch umschreiben, dass der nichtlineare Anteil im Kovarianz-Zyklus des Erweiterten Kalman-Filters in die Kovarianzmatrix des Systemrauschens (dem einzigen Designparameter bei einem Kalman-Filter) verlagert wird, wobei der resultierende Kalman-Filter linear wird. Das bedeutet, dass die Kalman-Gain Matrix nicht von dem aktuellen Zustandsvektor abhängt und daher offline berechnet werden kann. Ferner wird der Filter auf diese Weise stabil.

Nachfolgend wird dieser Ansatz näher erläutert, wobei das zugrunde gelegte Modell des Kraftfahrzeuges beispielsweise auf dem Fahrzeug modell von Henk Smakman ("Functional Integration of Slip Control With Active Suspension for Improved Lateral Vehicle Dynamics", erschienen 2000 im Herbert Utz Verlag) beruht. Ein geeignetes Modell wird ferner in der Patentanmeldung DE 102004006944.1 der Anmelderin beschrieben. Das Modell 21 kann wie erwähnt insbesondere ein nichtlineares Reifenmodell sowie eine lineare Körperdynamik enthalten, wobei die Rückkopplung der Zustände der Körperdynamik über das Reifenmodell erfolgt. Die zugehörige Zustandsgleichung des Systems kann allgemein wie folgt notiert werden:

$$\underline{\dot{x}}(t) = A \cdot \underline{x}(t) + \underline{f}\left[\underline{x}(t)\right] + B \cdot \underline{u}(t) + G \cdot \underline{w}(t) \qquad (1)$$

Hierin beschreiben die Matrizen $A$ und $B$ die linearen Anteile der Dynamik, während die nichtlineare Dynamik durch die Funktion $f$ erfasst wird. Der zusätzliche mit dem Gewicht $G$ a ddierte Zufallsvektor $\underline{w}(t)$ beschreibt das Systemrauschen, welches als weißes Gaußsches Rauschen mit einem Erwartungswert von Null und einer durch das Filterdesign bestimmten Kovarianz $Q$ angenommen wird.

Gleichung (1) führt wie erwähnt zu einem Erweiterten Kalman-Filter, dessen Stabilität nicht nachgewiesen werden kann, da die Kovarianzen des Vorhersagefehlers und damit die Kalman-Gain Matrix auf dem aktuellen Zustand beruhen. Um die Kalman-Gain Matrizen für jeden Zeitpunkt zu bestimmen ist ferner die Online-Berechnung der vollständigen Kovarianzen erforderlich.

Zur Behebung dieser Nachteile werden die Kovarianzen des Vorhersagefehlers und des Filterfehlers ausgehend vom linearen Modell berechnet und dafür im Gegenzug die Kovarianz des Systemrauschens erhöht, welche der Designparameter des Filters ist. Da die Kovarianz des Systemrauschens nicht durch irgendeinen physikalischen Wert bestimmt ist, kann sie so gewählt werden, dass die Auslegung des Filters optimal wird.

Die von der Vernachlässigung der nichtlinearen Dynamik beeinflusste Vorhersage wird somit auf eine lineare Vorhersage der Kovarianzen reduziert. Die Erwartungswerte werden jedoch nicht auf eine lineare Vorhersage reduziert, sondern hier wird die nichtlineare Abbildung des Reifenmodells beibehalten. Die Abschätzung ist daher korrekt, während die Kovarianzmatrix ungenau ist, was sie jedoch bei einem Erweiterten Kalman-Filter ohnehin ist. Es wird lediglich der Fehler der Kovarianzmatrix des Vorhersagefehlers durch Weglassen der nichtlinearen D y-namik erhöht, wobei dieser Fehler vorliegend in der Kovarianzmatrix des Systemrauschens untergebracht wird.

In der zeitdiskreten Formulierung lautet obige Gleichung (1):

$$\underline{x}(k+1) = A \cdot \underline{x}(k) + \underline{f}\ [\underline{x}(k)] + B \cdot \underline{u}(k) + G \cdot \underline{w}(k) \tag{2}$$

Die zugehörige (a priori) Abschätzung des Zustandsvektors $\underline{x}$ zum nächsten Zeitpunkt *(k+1)* ist:

$$\hat{\underline{x}}^{-}(k+1) = A \cdot \hat{\underline{x}}^{+}(k) + \underline{f}\ \left|\hat{\underline{x}}^{+}(k)\right| + B \cdot \underline{u}(k) \tag{3}$$

Die korrekte Kovarianzmatrix des Vorhersagefehlers würde hierfür wie folgt lauten:

$$P_{xx}^{-}(k+1) = \left(A + \left[\frac{\partial}{\partial \underline{x}(k)}\underline{f}\ [\underline{x}(k)]\right]\Bigg|_{\underline{x}(k)=\hat{\underline{x}}^{+}(k)}\right) \cdot P_{xx}^{+}(k) \cdot \left(A + \left[\frac{\partial}{\partial \underline{x}(k)}\underline{f}\ [\underline{x}(k)]\right]\Bigg|_{\underline{x}(k)=\hat{\underline{x}}^{+}(k)}\right)^{T} + Q(k)$$

$$(4)$$

Diese Gleichung wird nunmehr vereinfacht zu

$$P_{xx}^{-}(k+1) = A \cdot P_{xx}^{+}(k) \cdot A^{T} + Q_{etxtended}(k)\ , \tag{5}$$

wobei $Q_{extended}(k)$ eine modifizierte (erhöhte) Kovarianzmatrix des Systemrausches ist, durch welche die mit der Vereinfachung verbundenen Fehler berücksichtigt werden sollen. (Anmerkung: Die Matrizen A in den Gleichungen (4) und (5) können unterschiedlich voneinander sein, wenn eine nicht verschwindende Ableitung der Funktion fvorliegt.)

Die gewonnene Formulierung erlaubt es, die Daten eines Messvektors $\underline{y}$ (z. B. Gierrate und Seitenbeschleunigung) in das Modell aufzunehmen und eine konstante Kalman-Gain Matrix zu bestimmen. Im Falle des verwendeten linearen Modells (5) kann die Kalman-Gain Matrix nämlich aus dem Kovarianz-Zyklus ohne Verwendung der Schätzwerte bestimmt werden. Da die Kalman-Gain Matrix unabhängig von den aktuellen Zuständen ist, kann sie offline bestimmt und dann in das Modell als eine Menge von Gewichtungsfunktionen für die Residuen eingeschlossen werden. Eine Berechnung der Matrix in jedem Zeitschritt erübrigt sich somit.

Interpolation der Kalman-Gain Matrix

Bei einem alternativen Ansatz zur Vereinfachung des Erweiterten Kalman-Filters wird zunächst beispielhaft davon ausgegangen, dass der Fahrzeugzustand $\underline{x}$ durch die drei Eingangsvariablen Lenkradwinkel $\delta_{L}$, Längsgeschwindigkeit $V_x$ des Fahrzeuges sowie Seitenbeschleunigung $a_y$ beschrieben wird. Die Komponenten der Kalman-Gain Matrizen werden bei diesem Ansatz offline für verschiedene Fahrmanöver durch einen diskreten Erweiterten Kalman-Filter berechnet und dann basierend auf den drei genannten Eingangsvariablen für den gesamten Zustandsraum approximiert. Dies führt zu vier Skalarfunktionen (da die Kalman-Gain Matrix die Dimension 2x2 hat), wobei jede Funktion von den vorstehend genannten drei Eingangsvariablen $\delta_{L}$, $v_x$, $a_y$ abhängt. Die Funktionen werden dann zur Gewic h-tung der Rückkopplungen von den Messungen (Lateralbeschleunigung und Gierrate) auf die Zustände des Fahrzeugmodells (Gierrate und Lateralgeschwindigkeit) verwendet.

Die Offline-Berechnung mit Hilfe des Erweiterten Kalman-Filters erlaubt es, die Kalman-Gain Matrizen als Funktionen der aktuellen Zustände zu beschreiben. Der Lenkradwinkel und die Längsgeschwindigkeit sind dabei Variablen, welche das Verhalten eines Einspurmodells (single track model) beschreiben, während die Lateralbeschleunigung ein zusätzlicher Parameter ist, mit dem das Reifenverhalten in dem Ansatz berücksichtigt wird.

Die detaillierte Beschreibung des vorliegenden Ansatzes beginnt wiederum mit den obigen zeitdiskreten Gleichungen (2), (3) und (4). In Fortsetzung des Erweiterten Kalman-Filters wird basierend auf der Kovarianzmatrix des Vorhersagefehlers gemäß Gleichung (4) die Kovarianzmatrix des Filterfehlers wie folgt erhalten:

$$P_{xx}^{+}(k+1) = P_{xx}^{-}(k+1) - K(k+1)\cdot C(k+1)\cdot P_{xx}^{-}(k+1)$$
$$= P_{xx}^{-}(k+1) - P_{xx}^{-}(k+1)\cdot C^{T}(k+1)\cdot\left[C(k+1)\cdot P_{xx}^{-}(k+1)\cdot C^{T}(k+1)+R(k+1)\right]^{-1}\cdot C(k+1)\cdot P_{xx}^{-}(k+1)$$

$$(6)$$

Hierin berücksichtigt die Matrix $C$ den Messvorgang, die Matrix R das Messrauschen. Die $2\times2$-dimensionale Kalman-Gain Matrix $K$ wird für jeden Zeitschritt (d.h. für jeden Zustand des Fahrzeuges) in Abhängigkeit von den drei Eingangsvariablen wie folgt erhalten:

$$K(k+1) = P_{xx}^{-}(k+1)\cdot C^{T}(k+1)\cdot\left[C(k+1)\cdot P_{xx}^{-}(k+1)\cdot C^{T}(k+1)+R(k+1)\right]^{-1} \qquad (7)$$

Alle Elemente der Kalman-Gain Matrix sind nunmehr Funktionen der drei Eingangsvariablen $\delta_L$, $v_x$ und $a_y$. Für eine Menge an Testmanövern, die möglichst den gesamten von den drei Eingangsvariablen gebildeten Definitionsbereich repräsentativ erfassen, können somit an ausgewählten Stützpunkten die Komponenten $k_{ij}$ der Kalman-Gain Matrizen $K$ exakt berechnet werden. Die durchgeführten Manöver können dabei insbesondere solche ohne eine Kopplung (z. B. konstante Kurvenfahrt, Bremsen bei Geradeausfahrt) oder mit Kopplung (z. B. Spurwechsel, Bremsen während einer Kurvenfahrt, Slalom) sein.

Die nur auf der Untermenge der Stützpunkte berechneten Kalman-Gain Matrizen werden in einem nächsten Schritt auf den gesamten Definitionsbereich der drei Eingangsvariablen $\delta_L$, $v_x$, $a_y$ erweitert, indem geeignete Näherungsfunktionen $\kappa_{ij}$ gefittet werden. Dies kann beispielsweise über eine Minimierung des quadratischen Fehlers gemäß

$$\left\|k_{ij}(k) - \kappa_{ij}\left(a_y(k),\delta_L(k),v_x(k)\right)\right\| \overset{!}{=} \min$$

erfolgen. Da die Komponenten $k_{ij}$ der Kalman-Gain Matrizen Zufallsvariablen sind (aufgrund der Abhängigkeit vom aktuellen Zustand), wird diese auf der zweiten Ordnung, d. h. der Gausapproximation, beruhende Minimierung verwendet.

Die mit dem Estimator 20 verarbeiteten Größen können insbesondere die Folgenden sein:

Eingang _u_:
Fahrzeuggeschwindigkeit
Lenkradwinkel

Mögliche Ausgänge:
Gierrate (Zustand)
Lateralbeschleunigung
Schwimmwinkel oder Lateralgeschwindigkeit (Zustand)
Schräglaufwinkel der Räder (vorne/hinten)
Rollwinkel, Rollrate (Zustände)
Nickwinkel, Nickrate (Zustände)
Vertikalgeschwindigkeit, Vertikalbewegung (Zustände)
dynamische Radbelastung für jedes Rad
dynamische Radseitenkräfte für jedes Rad.

Messung _y_:
Gierrate
Seitenbeschleunigung

Mit den Messungen ist es möglich, die Genauigkeit der gesamten horizontalen Bewegungen (Gierrate, Seitenbeschleunigung, Fahrzeugschwimmwinkel) sowie des Rollwinkels zu verbessern, da diese nur auf der Kenntnis der Lateralbeschleunigung beruhen.

**Patentansprüche**

1. Verfahren zur Abschätzung des Zustandsvektors $\underline{x}$ eines Kraftfahrzeuges, wobei die Komponenten des Zustandsvektors den dynamischen Zustand des Kraftfahrzeuges gemäß einem vorgegebenen Beschreibungsansatz eindeutig beschreiben, wobei

   a) der Zustandsvektor $\underline{x}$ einer stochastischen Differentialgleichung der Form

$$\underline{\dot{x}}(t) = A \cdot \underline{x}(t) + \underline{f}\left[\underline{x}(t)\right] + B \cdot \underline{u}(t) + G \cdot \underline{w}(t)$$

   unterliegt, in welcher A, B, G Matrizen, $f$ eine das Verhalten der Räder des Kraftfahrzeuges beschreibende nichtlineare Funktion, $u$ ein Steuervektor und $w$ die Zufallsvariable eines Prozessrauschens sind;
   b) ein vom Zustandsvektor $\underline{x}$ abhängiger Messvektor $\underline{y}$ gemessen wird;
   c) der Zustandsvektor $\underline{x}$ mit Hilfe eines Erweiterten Kalman-Filters abgeschätzt wird, wobei die Berechnung der zugehörigen Kalman-Gain Matrix approximativ erfolgt; und
   d) wobei der Messvektor $\underline{y}$ die Gierrate und die Lateralbeschleunigung enthält und der abgeschätzte Zustandsvektor $\underline{x}$ die dynamische Radbelastung für jedes Rad enthält.

2. Verfahren nach Anspruch 1,
   **dadurch gekennzeichnet, dass**
   der Zustandsvektor $\underline{x}$ und/oder der Messvektor $\underline{y}$ ferner mindestens eine der folgenden Größen enthält: den Steuerwinkel des Lenksystems, die Vorwärtsgeschwindigkeit, die Lateralgeschwindigkeit, den Nickwinkel, die Nickrate, den Rollwinkel, die Rollrate, den Schwimmwinkel des Fahrzeuges, den Schräglaufwinkel der Räder, den Hub, die Hubgeschwindigkeit, und/oder die dynamische Radseitenkraft.

3. Verfahren nach Anspruch 1 oder 2,
   **dadurch gekennzeichnet, dass**
   die Kalman-Gain Matrix approximativ als unabhängig vom Zustandsvektor $\underline{x}$ angenommen wird.

4. Verfahren nach Anspruch 3,
   **dadurch gekennzeichnet, dass**
   für die Berechnung der Kalman-Gain Matrix eine Linearisierung der Differentialgleichung (1) und eine erhöhte Kovarianz des Prozessrauschens zugrunde gelegt werden.

5. Verfahren nach Anspruch 1 oder 2,
   **dadurch gekennzeichnet, dass**
   die Komponenten der Kalman-Gain Matrix durch von Komponenten des Zustandsvektors $\underline{x}$ und/oder des Messvektors $\underline{y}$ abhängige Näherungsfunktionen approximiert werden.

6. Verfahren nach Anspruch 5,
   **dadurch gekennzeichnet, dass**
   die Komponenten der Kalman-Gain Matrix für im Zustandsraum verteilte Stützpunkte berechnet werden, und dass die Näherungsfunktionen in diesen Stützpunkten an die berechneten Werte gefittet werden.

7. Verfahren nach Anspruch 5 oder 6,
   **dadurch gekennzeichnet, dass**
   die Stützpunkte typischen Fahrmanövern entsprechen, vorzugsweise einer konstanten Kurvenfahrt, einem Bremsen bei Geradeausfahrt, einem Spurwechsel, einem Bremsen bei Kurvenfahrt und/oder einer Slalomfahrt.

8. Steuerungsvorrichtung für ein Kraftfahrzeug, enthaltend einen Estimator (20), welcher dahingehend ausgebildet ist, ein Verfahren nach mindestens einem der Ansprüche 1 bis 7 durchzuführen.

9. Steuerungsvorrichtung nach Anspruch 8,
   **dadurch gekennzeichnet, dass**
   diese dahingehend ausgebildet ist, eine elektronische Fahrzeugstabilisierung durchzuführen.

**Claims**

1.  Method for estimating the state vector $\underline{x}$ of a motor vehicle, the components of the state vector uniquely describing the dynamic state of the motor vehicle in accordance with a prescribed descriptive formulation, in which

    a) the state vector $\underline{x}$ is governed by a stochastic differential equation of the form

    $$\underline{\dot{x}}(t) = A \cdot \underline{x}(t) + \underline{f}[\underline{x}(t)] + B \cdot \underline{u}(t) + G \cdot \underline{w}(t) \ ,$$

    in which $A, B, G$ are matrices, $f$ is a nonlinear function describing the behaviour of the wheels of the motor vehicle, $u$ is a control vector and $w$ is the random variable of a process noise;
    b) a measurement vector $\underline{v}$ dependent on the state vector $\underline{x}$ is measured;
    c) the state vector $\underline{x}$ is estimated with the aid of an extended Kalman filter, the calculation of the associated Kalman gain matrix being performed approximately; and
    d) the measurement vector $\underline{v}$ including the yaw rate and the lateral acceleration, and the estimated state vector $\underline{x}$ including the dynamic wheel loading for each wheel.

2.  Method according to Claim 1, **characterized in that** the state vector $\underline{x}$ and/or the measurement vector $\underline{v}$ further includes at least one of the following variables: the control angle of the steering system, the forward speed, the lateral speed, the pitch angle, the pitch rate, the roll angle, the roll rate, the attitude angle of the vehicle, the slip angle of the wheels, the lift, the lifting speed, and/or the dynamic wheel lateral force.

3.  Method according to Claim 1 or 2, **characterized in that** the Kalman gain matrix is assumed approximately to be independent of the state vector $\underline{x}$.

4.  Method according to Claim 3, **characterized in that** the calculation of the Kalman gain matrix is based on a linearization of the differential equation (1) and on an increased covariance of the process noise.

5.  Method according to Claim 1 or 2, **characterized in that** the components of the Kalman gain matrix are approximated by approximation functions dependent on components of the state vector $\underline{x}$ and/or of the measurement vector $\underline{v}$.

6.  Method according to Claim 5, **characterized in that** the components of the Kalman gain matrix are calculated for interpolation points distributed in the state space, and **in that** the approximation functions are fitted onto the calculated values at these interpolation points.

7.  Method according to Claim 5 or 6, **characterized in that** the interpolation points correspond to typical driving manoeuvres, preferably to instances of constant cornering, braking while driving straight ahead, lane changing, braking when cornering, and/or slalom driving.

8.  Control device for a motor vehicle including an estimator (20) which is designed for carrying out a method according to at least one of Claims 1 to 7.

9.  Control device according to Claim 8, **characterized in that** said control device is designed to carry out an electronic vehicle stabilization.


**Revendications**

1.  Procédé pour évaluer le vecteur d'état $\underline{x}$ d'un véhicule automobile, les composants du vecteur d'état décrivant explicitement l'état dynamique du véhicule automobile conformément à une approche de description prédéfinie, selon lequel

    a) le vecteur d'état $\underline{x}$ est soumis à une équation différentielle stochastique sous la forme

$$\dot{\underline{x}}(t) = A \cdot \underline{x}(t) + \underline{f}\left[\underline{x}(t)\right] + B \cdot \underline{u}(t) + G \cdot \underline{w}(t)$$

dans laquelle A, B, G sont des matrices, f une fonction non linéaire qui décrit le comportement des roues du véhicule automobile, u un vecteur de commande et w la variable aléatoire d'un bruit de processus ;
b) un vecteur de mesure $\underline{y}$ dépendant du vecteur d'état $\underline{x}$ est mesuré ;
c) le vecteur d'état $\underline{x}$ est évalué à l'aide d'un filtre de Kalman étendu, le calcul de la matrice de gains de Kalman associée s'effectuant de manière approximative ; et
d) le vecteur de mesure $\underline{y}$ contenant le taux de lacet et l'accélération latérale et le vecteur d'état $\underline{x}$ estimé contenant la charge de roue dynamique pour chaque roue.

2. Procédé selon la revendication 1, **caractérisé en ce que** le vecteur d'état $\underline{x}$ et/ou le vecteur de mesure $\underline{y}$ contient en outre au moins l'une des grandeurs suivantes : l'angle de commande du système de direction, la vitesse en marche avant, la vitesse latérale, l'angle de tangage, le taux de tangage, l'angle de roulis, le taux de roulis, l'angle de flottement du véhicule, l'angle de dérive des roues, l'élévation, la vitesse d'élévation et/ou la force latérale dynamique des roues.

3. Procédé selon la revendication 1 ou 2, **caractérisé en ce que** la matrice de gains de Kalman est supposée approximativement indépendante du vecteur d'état $\underline{x}$.

4. Procédé selon la revendication 3, **caractérisé en ce que** le calcul de la matrice de gains de Kalman se base sur une linéarisation de l'équation différentielle (1) et une covariance accrue du bruit de processus.

5. Procédé selon la revendication 1 ou 2, **caractérisé en ce que** les composants de la matrice de gains de Kalman sont déterminés approximativement par des fonctions d'approximation dépendantes des composants du vecteur d'état $\underline{x}$ et/ou du vecteur de mesure $\underline{y}$.

6. Procédé selon la revendication 5, **caractérisé en ce que** les composants de la matrice de gains de Kalman sont calculés pour des points de référence distribués dans l'espace d'état et **en ce que** les fonctions d'approximation sont rattachées aux valeurs calculées dans ces points de référence.

7. Procédé selon la revendication 5 ou 6, **caractérisé en ce que** les points de référence correspondent à des manoeuvres de conduite types, de préférence à une trajectoire en virage constante, à un freinage en ligne droite, à un changement de voie, à un freinage en virage et/ou à une circulation en slalom.

8. Dispositif de commande pour un véhicule automobile, contenant un dispositif d'estimation (20) qui est conçu pour mettre en oeuvre un procédé selon au moins l'une des revendications 1 à 7.

9. Dispositif de commande selon la revendication 8, **caractérisé en ce que** celui-ci est conçu pour réaliser une stabilisation électronique du véhicule.

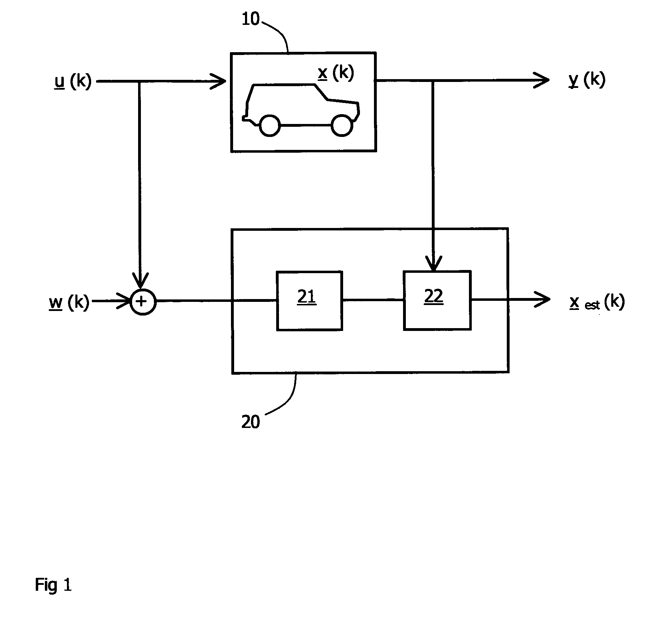

Fig 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10016896

- DE 102004006944

**In der Beschreibung aufgeführte Nicht-Patentliteratur**

- **Peter S. Maybeck.** Stochastic Models, Estimation, and Control. Academic Press, Inc, 1979, vol. 1

- **Greg Welch ; Gary Bishop.** An Introduction to the Kalman Filter. Department of Computer Science, University